# EUROPÄISCHE PATENTSCHRIFT

(11) **EP 3 086 894 B1**
(45) Veröffentlichungstag und Bekanntmachung des Hinweises auf die Patenterteilung: **15.11.2017**
(21) Anmeldenummer: 14821582.5
(22) Anmeldetag: 16.12.2014
(51) Int. Cl.: B22D 41/12, C21C 5/52, C21C 5/28, C21C 7/10, C21C 5/02, F27B 14/06, F27D 11/06, H05B 6/26, F27B 14/04, F27B 14/00, F27D 99/00, F27D 5/00

(54) **VORRICHTUNG UND VERFAHREN ZUM BEHANDELN VON METALLISCHEM MATERIAL**
DEVICE AND METHOD FOR TREATING METALLIC MATERIALS
DISPOSITIF ET PROCÉDÉ DE TRAITEMENT DE MATÉRIAU MÉTALLIQUE

(30) Priorität: 23.12.2013 DE 102013114811
(43) Veröffentlichungstag der Anmeldung: 02.11.2016
(73) Patentinhaber: ALD Vacuum Technologies GmbH, 63457 Hanau (DE)
(72) Erfinder: KEMMER, Hans Johann, 63322 Rödermark (DE); LEHNERT, Christian, 61118 Bad Vilbel (DE); EICH, Andreas, 63755 Alzenau (DE); SCHOLZ, Harald, 63517 Rodenbach (DE); ZOTZ, Peter, 63579 Freigericht (DE)
(74) Vertreter: Fuchs Patentanwälte Partnerschaft mbB
(86) Internationale Anmeldenummer: PCT/EP2014/078063
(87) Internationale Veröffentlichungsnummer: WO 2015/097025

(56) Entgegenhaltungen:
- EP-A2- 0 212 072

## Beschreibung

Die vorliegende Erfindung betrifft eine Vorrichtung und ein Verfahren zum Behandeln von metallischem Material. Die Erfindung ist insbesondere geeignet zur Behandlung bzw. zum Herstellen von Stahl und metallischen Legierungen, insbesondere von besonders hochwertigen Sonderstählen und -legierungen. Besonders bewährt hat sich die Erfindung bei der Behandlung von Eisen-basierten metallischen Materialien.

Die Herstellung vieler Stahlsorten erfordert mehrstufige Schmelzprozesse. Nahezu alle aus dem Stand der Technik bekannten Schmelzöfen haben stationäre Schmelzbehälter. Der Transport der flüssigen Schmelze zwischen den Behandlungsstationen erfolgt mittels Gießpfannen. Aus dem Einschmelzofen wird gemäß dem Stand der Technik zunächst eine flüssige Schmelze in eine Transportpfanne gegossen. Aus dieser Transportpfanne wird nach einem Ortswechsel mittels Kran die Schmelze wiederum in den Weiterbehandlungsofen abgegossen. Meist werden mehrere Pfannen genutzt. Diese Erfindung ermöglicht ein Arbeiten ohne den Einsatz dieser Pfannen. Damit verbunden sind ökonomische Vorteile.

Die vorliegende Erfindung bietet ferner die folgenden Vorteile: Eliminierung von Temperaturproblemen und Wärmeverlusten, wie sie normalerweise während des Transportes der Schmelze beim Einsatz der Pfannenwirtschaft (= Eine Vielzahl von Flüssigmetall-Transport-Pfannen mit Feuerfestmaterialien und deren Heizvorrichtungen, etc.) auftreten. Beim Einsatz der Pfannenwirtschaft gibt es relativ lange Transportzeiten zwischen den Schmelzaggregaten. Die benutzten Pfannen sind nicht geheizt. Teilweise findet eine Behandlung der Schmelze in den Pfannen mittels zusätzlicher Heizstände statt. Aufgrund der langen Transportzeiten und mehrmaligem Überführen der Schmelzen in andere Behälter kühlen die Schmelzen rasch ab und können beim Abgießen sogar erstarren, wenn die Behandlungszeiten ausgedehnt werden müssen, um bestimmte Gasgehalte oder Reinheitsgrade einzustellen. Die Wärmeverluste in der erfindungsgemäßen Einrichtung sind vor allem aufgrund sehr kurzer Transportzeiten und des einmaligen Umfüllens wesentlich geringer. Probleme der Temperaturführung bei der Überführung flüssiger Schmelze aus einem Einschmelzaggregat zum Weiterbehandlungsofen werden daher mit dieser Erfindung effizient vermieden.

In herkömmlichen Verfahren kann es zu Kreuzkontaminationen kommen. Durch den Verbleib von Restschmelze in den Gießpfannen kann sich bei Folgeschmelzen eine Kontamination des Materials ergeben. Die vorliegende Erfindung vermeidet dieses Problem größtenteils.

Mithilfe der vorliegenden Erfindung können neue Verfahrensrouten realisiert werden. Die Pfannenwirtschaft kann nur bei großen Chargen eingesetzt werden. Der Wärmeinhalt der Schmelze reicht dann meist aus, damit die Schmelze in den nicht beheizten Pfannen nicht erstarrt. Bei kleinen Schmelzmengen ist der Wärmeinhalt jedoch gering und die Schmelze erstarrt rasch. Die vorliegende Erfindung ermöglicht aufgrund des wesentlich geringeren Wärmeverlustes beim Transport und durch die sehr kurzen Transportzeiten auch die effiziente Verarbeitung kleinerer Schmelzmengen.

Die erfindungsgemäße Einrichtung und das erfindungsgemäße Verfahren ermöglichen maximale Flexibilität. Der Schmelzbehälter ist im gesamten Stahlwerk für die Aufnahme von Einsatzmaterialien und weitere Funktionalitäten nutzbar. Durch schnelle Transportvorgänge lässt sich die Anlagenproduktivität verbessern. Ein Schmelzofen und Weiterbehandlungsofen können gut getaktet werden. Schmelzbehälter können außerhalb der Schmelzposition chargiert und gegen entleerte Schmelzbehälter schnell ausgewechselt werden, um die Produktivität zu erhöhen.

Das erfindungsgemäße Verfahren und die erfindungsgemäße Einrichtung bieten erhöhte Sicherheit. Pfannen und auch die in Dokumenten aus dem Stand der Technik genannten Behälter werden meist mit einem Kran transportiert. Es findet keine Überwachung des Schmelzgefäßes während des Transportes statt. In Bezug auf Sicherheitsaspekte bedarf dieser Transport einer Optimierung. Diese Erfindung ermöglicht das sichere Transportieren des gesamten Behälters auf einem Schienensystem bei gleichzeitiger Überwachung des Zustandes des eigentlichen Schmelzgefäßes unter Vermeidung eines Umhängens und des Kran-Transportes.

Der Transport des gesamten Behälters wird möglich. Das umständliche Einsetzen des Schmelzgefäßes in eine Heizvorrichtung entfällt bei der vorliegenden Erfindung. Beschädigungen an den Komponenten, die sich durch unsachgemäßes Einsetzen ergeben können, werden vermieden. Die Sicherheit wird dadurch stark erhöht.

In herkömmlichen Verfahren und Vorrichtungen besitzt die Pfanne meist eine dickere Feuerfest-Außenmauerung und Tragstruktur. Daher ist die Heizeinrichtung meist örtlich weiter entfernt angeordnet als bei einer im Behälter befindlichen Induktionsspule. Dadurch steigt der Wirkungsgrad des Heizens.

Ein wesentlicher Unterschied zum Stand der Technik ist, dass der Schmelzbehälter der vorliegenden Erfindung selbst über eine Heizvorrichtung verfügt und mittels einer Transporteinrichtung verfahrbar ist. Im Stand der Technik EP 0 212 072 A2 etwa konnte zwar auch der Schmelzbehälter zu Wartungszwecken vom Deckel abgenommen werden. Der Schmelzbehälter umfasst auch die Spule und kann auf einem Transportwagen angeordnet sein. Der Schmelzbehälter ist jedoch zum Transport der Schmelze nicht geeignet oder bestimmt, weil die Erwärmung der Schmelze nur durch die Herstellung einer Flanschverbindung mit dem Deckel möglich ist. Eine Verbindung über ein Schnellkupplungssystem für Energie und Kühlwasser ist nicht vorgesehen. Während des Transports kann der Behälter also nicht gekühlt beziehungsweise warmgehalten werden.

WO 03/047792 A1 lehrt gegen die vorliegende Erfindung, indem von einem Behälter abgeraten wird, der Heizvorrichtung und Kühlvorrichtung mitführt. Stattdessen wird ein Gefäß vorgestellt, dass sowohl als Transportgefäß als auch als Warmhalte-, Entgasungs- und Gießgefäß eingesetzt werden kann. Das geschmolzene Material soll allerdings mit einem Schöpflöffel entnommen werden, was sehr ineffizient ist. Die Schmelze verbleibt während einiger Verfahrensschritte im Gefäß, so dass häufiges Umfüllen vermieden wird. Bei der Aluminiumverarbeitung ist dies im Hinblick auf Oxidbildung von besonderer Bedeutung. Die Magnetspule zum Heizen der Schmelze befindet sich allerdings in einem Heizstand und nicht am mobilen Schmelzbehälter. Das Gefäß verfügt nicht über eine Heizvorrichtung, sondern wird zum Heizen auf einen Heizstand gestellt.

DE 2 035 221 B lehrt eine Einrichtung zum Warmhalten von metallischen Schmelzen. Auch hier ist die Heizeinrichtung allerdings ortsfest ausgestaltet. In die Heizeinrichtung kann eine Gießpfanne eingesetzt werden. Die Warmhaltung der Schmelze erfordert einen umständlichen Arbeitsschritt, da die Gießpfanne in die Warmhalteposition bewegt werden muss. Die Gießpfanne selbst beinhaltet keine Heizeinrichtung.

DE 1 508 112 A betrifft ein Verfahren und eine Anordnung zum Behandeln von Metallschmelzen. Der verwendete Tiegel kann auf einem Wagen angeordnet sein. Er ist dann zwischen Erwärmungs- und Evakuierungsvorrichtungen verschiebbar. Die Elektroden beinhaltende Heizeinrichtung ist allerdings am Deckel befestigt und somit nicht Teil des Behälters. Zwar enthält der Tiegel auch eine Spule zum Rühren der Schmelze, diese ist aber nicht zum Heizen geeignet. Zwar wird durch den Rührer eine gewisse Warmhaltung erzielt, dessen Leistung reicht aber bei Weitem nicht aus, um die Schmelze effektiv zu wärmen oder gar aufzuheizen. Ferner ist kein Schnellkupplungssystem vorgesehen, um den Schmelzbehälter in der Behandlungsstation zu erwärmen. Von deutlichem Nachteil der soeben beschriebenen Vorrichtung ist, dass der Tiegel nicht an einer Station vakuumbehandelt und geheizt werden kann.

Es besteht somit ein Bedarf, eine Vorrichtung und ein Verfahren zur Behandlung von metallischem Material bereit zu stellen, mit dem mehrere Verfahrensschritte in einem einzigen Gefäß durchgeführt werden können, ohne dass das Gefäß umständlich in Heizvorrichtungen oder Vakuumkammern eingeführt werden muss. Es ist die Aufgabe dieser Erfindung eine Vorrichtung und ein Verfahren bereit zu stellen, mit dem mehrere Schritte der Metallbehandlung in einem Schmelzbehälter durchgeführt werden können, ohne dass umständliche Transfers in Gießpfannen erforderlich sind.

Hierdurch können auch komplexe Stähle und Legierungen mit sauerstoffaffinen Legierungszusätzen behandelt werden, bei denen der Verbleib der Schmelze während der gesamten Erschmelzungs-, Behandlungs- und Abguss-Phase unter Luftabschluss (Vakuum) erforderlich ist, um eine Re-Oxidation der sauerstoffaffinen Elemente zu vermeiden.

Die Aufgabe wird durch die Gegenstände der Patentansprüche gelöst.

### Beschreibung der Erfindung

Diese Erfindung betrifft eine Vorrichtung zum Behandeln von metallischem Material, umfassend einen oder mehrere mobile Schmelzbehälter und mindestens eine Behandlungsstation, wobei
- der mobile Schmelzbehälter einen Tiegel, eine Induktionsheizeinrichtung mit einer Induktions-Spule und ein Gehäuse umfasst,
- die Behandlungsstation einen Deckel aufweist, der geeignet ist, den Tiegel gasdicht zu verschließen, und
- der mobile Schmelzbehälter von der Behandlungsstation, vorzugsweise automatisch getrennt bzw. angekoppelt und unabhängig von der Behandlungsstation verfahren werden kann,
dadurch gekennzeichnet, dass
- die Vorrichtung über ein vorzugsweise automatisches Schnellkupplungssystem verfügt, so dass (vorzugsweise alle) Strom- und Medien-Versorgungsanschlüsse von der Behandlungsstation an den mobilen Schmelzbehälter angeschlossen werden können, um die Induktionsheizeinrichtung zu kühlen und mit Strom zu versorgen,
- eine Transporteinrichtung vorgesehen ist, die geeignet ist, den Schmelzbehälter aus dem Bereich der Behandlungsstation heraus zu bewegen,
- Mittel an oder in der Transporteinrichtung und/oder dem mobilen Schmelzbehälter vorgesehen sind, um die Induktionsheizeinrichtung während der Bewegung des Schmelzbehälters zu kühlen und mit Strom zu versorgen.

Die Vorrichtung dieser Erfindung verbindet also eine ganze Reihe von Vorteilen. Dadurch, dass der Schmelzbehälter mobil ausgestaltet ist, ist es nicht mehr erforderlich, das metallische Material für verschiedene Behandlungsschritte umzufüllen. Der Einsatz von Gießpfannen kann entfallen. Ferner verbindet die erfindungsgemäße Vorrichtung Schmelze und Vakuumbehandlung in einer einzigen Behandlungsstation. Die Heizeinrichtung, welche für die Schmelze notwendig ist, befindet sich in dem Schmelzbehälter; die Behandlungsstation weist wiederum einen Deckel auf, der den Tiegel gasdicht verschließen kann. So ist es möglich, den Tiegel nach Ankopplung an die Behandlungsstation zu evakuieren. Es ist nicht mehr erforderlich, den Tiegel zwischen einer Schmelzstation und einer Vakuumbehandlungsstation zu verfahren. Ferner bietet die Heizeinrichtung, die Teil des Schmelzbehälters ist, die Möglichkeit, den Inhalt des Tiegels während des Transportes zu wärmen, so dass eine Schmelze, die sich in dem Tiegel befindet, nicht erstarrt. Sofern also mehrere Behandlungsstationen vorgesehen sind, können diese weiter voneinander entfernt angeordnet sein.

Die Transporteinrichtung und/oder der Schmelzbehälter weisen vorzugsweise ein Kühlaggregat auf, um die Induktionsspule während des Transports zu kühlen. Induktionsspulen zum Heizen müssen gekühlt werden. Abhängig von der Leistung, mit der die Induktionsheizeinrichtung arbeitet, muss mehr oder weniger Wärme wieder abgeführt werden. Daher ist es bevorzugt, ein Hilfskühlaggregat vorzusehen, dass die Spule während des Transportes kühlt. Das Hilfskühlaggregat kann an dem Schmelzbehälter angeordnet sein. Es ist allerdings bevorzugt an der Transporteinrichtung angeordnet, so dass das Hilfskühlaggregat beim Kippen des Schmelzbehälters nicht mit angehoben werden muss.

Die Transporteinrichtung kann eine Zugmaschine sein. Die Zugmaschine kann sich beispielsweise auf Schienen bewegen. Soll ein Schmelzbehälter von der Behandlungsstation entfernt werden, so wird die Zugmaschine mit dem Schmelzbehälter verbunden. Notwendige Anschlüsse, welche eine Versorgung des Schmelzbehälters mit Strom und/oder Kühlmittel sicherstellen, werden vorzugsweise ebenfalls vorgesehen. In einer solchen Ausführungsform weist der mobile Schmelzbehälter vorzugsweise Räder auf, damit er von der Zugmaschine auf den Schienen gezogen werden kann.

Die Induktionsheizeinrichtung ist vorzugsweise jedenfalls nach Ankopplung an die Behandlungsstation geeignet, in dem Tiegel befindliches metallisches Material in einem geschmolzenen Zustand zu halten und/oder einzuschmelzen. Die Heizeinrichtung des Schmelzbehälters ist so leistungsstark, dass metallisches Material bei entsprechender Stromzufuhr eingeschmolzen werden kann. Die Stromzufuhr erfolgt im angekoppelten Zustand über die Behandlungsstation. Die Heizeinrichtung verfügt vorzugsweise über eine Leistung im Bereich von wenigstens 1 MW bis 7 MW, besonders bevorzugt von 3 MW bis 6 MW. Im abgekoppelten Zustand, wenn die Stromversorgung nicht über die Behandlungsstation sichergestellt ist, kann die Heizeinrichtung über die Stromversorgung der Transporteinrichtung oder des Schmelzbehälters mit einer Leistung von 100 kW bis <1 MW, vorzugsweise 300 kW bis 700 kW betrieben werden. Diese Leistung reicht aus, um ein Erstarren der Schmelze während eines Transportes zu unterbinden.

Die Behandlungsstation verfügt vorzugsweise über eine Kippeinrichtung, um eine Schmelze des metallischen Materials abzugießen. Die Behandlungsstation dient dazu, das metallische Material zu behandeln. Darunter können verschiedene Bearbeitungsschritte subsummiert werden. Das metallische Material kann im Schmelzbehälter an der Behandlungsstation aufgeschmolzen werden. Weitere Behandlungsschritte werden weiter unten erläutert.

Der Schmelzbehälter umfasst einen Tiegel. Der Tiegel ist vorzugsweise von der Heizeinrichtung in Form einer Induktionsspule umgeben. Ferner weist der Schmelzbehälter ein vorzugsweise gasdichtes Gehäuse auf, das vorzugsweise aus Metall besteht. Der Schmelzbehälter sowie seine Bestandteile sind zum Betrieb unter Vakuum ausgelegt. Damit die Induktionsheizung betrieben werden kann, ist vorteilhafterweise ein Kühlsystem für die Induktionsspule vorgesehen. Das Kühlsystem umfasst insbesondere Leitungen für ein Kühlmedium. Die Leitungen sind vorzugsweise im Schmelzbehälter in der Nähe der Induktionsspule angeordnet, um eine wirksame Kühlung zu gewährleisten. In einer bevorzugten Ausführungsform kann der Schmelzbehälter lösbar mit der Transporteinrichtung verbunden werden.

Das metallische Material, welches vorzugsweise in dem mobilen Ofenmodul behandelt wird, umfasst Metalle und Metalllegierungen. Besonders bevorzugte metallische Materialien sind Stähle, insbesondere hochlegierte Stähle. Das metallische Material ist vorzugsweise nicht Aluminium, Magnesium oder eine Legierung mit Aluminium oder Magnesium als Hauptbestandteil (>50 Gew.-%), weil hierfür besondere Vorrichtungen erforderlich wären. Das erfindungsgemäß behandelte metallische Material umfasst vorzugsweise wenigstens eines der Metalle Kupfer, Eisen, Kobalt, Chrom und Nickel in einem Masseanteil von wenigstens 30 %, weiter bevorzugt 40 % und besonders bevorzugt 50 %. Hochlegierte Stähle, wie sie erfindungsgemäß bevorzugt unter Verwendung des beschriebenen Verfahrens hergestellt werden, müssen unter Vakuum behandelt werden.

Die Induktionsspule, die Bestandteil der Heizeinrichtung ist, ist im Schmelzbehälter außerhalb des Tiegels angeordnet. Diese muss zwingend bei flüssiger Beladung gekühlt werden um einer Schädigung vorzubeugen. Entscheidend ist, dass die Schmelze, die sich im Tiegel befindet, während des Transports mit Hilfe der Heizeinrichtung warm gehalten werden kann. Zu diesem Zweck ist auch das Kühlsystem vorzugsweise Bestandteil des Schmelzbehälters und/oder der Transporteinrichtung. Das Kühlsystem kann vorzugsweise Leitungen für Kühlmedium, ein Reservoir für Kühlmedium, wenigstens eine Pumpe, wenigstens einen Verdampfer und/oder wenigstens einen Kompressor umfassen.

Dadurch, dass der Schmelzbehälter sowohl Heizeinrichtung als auch Kühlsystem umfasst, wird es möglich, eine Schmelze für weitere Behandlungsschritte flüssig zu halten. Es ist nicht mehr erforderlich, eine externe Heizeinrichtung für die Schmelze vorzusehen. Es ist insbesondere nicht erforderlich, die Schmelze von einer Behandlungsstation zum Aufheizen an eine andere Behandlungsstation zur weiteren Behandlung zu bewegen. Die Schmelze kann gemäß der vorliegenden Erfindung in dem mobilen Schmelzbehälter beheizt werden und für einen weiteren Behandlungsschritt in dem Schmelzbehälter verbleiben. Auch wenn sich der weitere Behandlungsschritt verzögern sollte, droht die Schmelze nicht zu erstarren. Der Schmelzbehälter kann erfindungsgemäß bevorzugt zur Durchführung mehrerer Behandlungsschritte an der Behandlungsstation verbleiben.

In der einfachsten und daher bevorzugten Ausführungsform ist das Kühlmedium Wasser. Das Kühlsystem umfasst vorzugsweise ein Reservoir für das Kühlmedium. Das Reservoir ist vorzugsweise als Bestandteil der Transporteinrichtung ausgeführt. Hintergrund ist, dass der Schmelzbehälter bevorzugt von der Transporteinrichtung lösbar ausgestaltet ist. Der Schmelzbehälter soll unter anderem deswegen von der Transporteinrichtung gelöst werden können, damit die Schmelze aus dem Schmelzbehälter abgegossen werden kann, ohne dass die Transporteinrichtung angehoben werden muss. Es leuchtet ein, dass das Reservoir für das Kühlmedium aufgrund seines Gewichts besser als ein Teil der Transporteinrichtung ausgeführt werden sollte. Auch bevorzugt vorhandene Pumpen, Verdampfer und/oder Kompressoren sind vorzugsweise an oder in der Transporteinrichtung angeordnet.

Die Transporteinrichtung und/oder der Schmelzbehälter umfasst vorzugsweise eine Stromversorgung, welche geeignet ist, die Heizeinrichtung und das Kühlsystem mit der notwendigen Energie für deren Betrieb während des Transportes des Schmelzbehälters zu versorgen. Die Stromversorgung ist vorzugsweise als Teil der Transporteinrichtung ausgeführt. Typischerweise ist die Stromversorgung, die während des Transportes für den Betrieb der Heizeinrichtung und des Kühlsystems notwendig ist, weniger leistungsstark als die Stromversorgung, welche die Heizeinrichtung im angekoppelten Zustand versorgt. Die Stromversorgung der Transporteinrichtung und/oder des Schmelzbehälters kann ein Generator, insbesondere ein Dieselgenerator sein. Es ist aber auch vorstellbar, die Stromversorgung mithilfe von Batterien zu gewährleisten.

Wie zuvor beschrieben, kann der Schmelzbehälter vorzugsweise von der Transporteinrichtung gelöst werden. Dadurch wird es ermöglicht, den Schmelzbehälter zu kippen, um die Schmelze ab zu gießen. Es liegt auf der Hand, dass beim Trennen des Schmelzbehälters von der Transporteinrichtung eine Verbindung von Leitungen für das Kühlmedium getrennt werden muss. Gleiches gilt für die Stromversorgung.

Um eine möglichst unterbrechungsfreie Versorgung des Schmelzbehälters mit den für seinen Betrieb notwendigen Medien sicher zu stellen, ist für den Anschluss entsprechender Medienleitungen (Stromleitungen, Wasser, Inertgas, Datenkabel,...) eine (vorzugsweise automatische) Schnellkupplung zwischen Schmelzbehälter und Behandlungsstation vorgesehen. Diese Schnellkupplung erlaubt die schnelle, einfache und sichere Verbindung sowie Trennung von Schmelzbehälter und Behandlungsstation. Die Schnellkupplung wird benötigt um Schäden an der Spule durch Wärmeleitung aus der Schmelze vorzubeugen.

Die Schnellkupplung umfasst vorzugsweise drei Komponenten, insbesondere ein Abnehmermodul auf der Abnehmerseite (am Schmelzbehälter), ein Versorgungsmodul auf der Versorgungsseite und eine Aufnahme- und Hubeinheit. Das Versorgungsmodul kann Bestandteil der Behandlungsstation sein. Das Abnehmermodul ist vorzugsweise Bestandteil des Schmelzbehälters. Das Versorgungsmodul ist mit der Hauptstromversorgung und der Hauptkühlmittelversorgung verbunden. Versorgungsmodul und Abnehmermodul können vorzugsweise schnell und automatisch gekoppelt und entkoppelt werden, insbesondere durch Anheben des Versorgungsmoduls an das Abnehmermodul.

An die Aufnahme- und Hubeinheit kann das Versorgungsmodul automatisch an- und abgekoppelt werden. Sie dient zum Lagern der Versorgereinheit während des Transports des mobilen Schmelzbehälters und zu deren Positionierung (Heben und Senken) beim Ankoppelvorgang von Versorger- und Abnehmerseite. Während des Transports des Schmelzbehälters sind Versorgermodul und Aufnahmeeinheit vorzugsweise miteinander gekoppelt und lagern vorzugsweise auf einer Bühne in der Nähe der Behandlungsstation. Das Abnehmermodul ist vorzugsweise am mobilen Schmelzbehälter befestigt. Im angekoppelten Zustand sind Abnehmer- und Versorgerseite miteinander gekoppelt und die Aufnahme- und Hubeinheit lagert in der Nähe der Behandlungsstation.

Das Abnehmermodul und das Versorgermodul sind vorzugsweise so ausgestaltet, dass eine sichere Verbindung hergestellt werden kann, insbesondere ist es vorstellbar, an einem der Module Öffnungen vorzusehen, die geeignet sind, Verbindungselemente des anderen Moduls aufzunehmen. Die Verbindungselemente sind dann so geformt, dass sie in die Öffnungen eingeführt werden können. Die Öffnungen können am Abnehmermodul oder am Versorgermodul vorgesehen sein. Es wird dann eine Steckverbindung möglich, die automatisch durch Anheben oder Absenken des Abnehmer- oder Versorgermoduls sichergestellt wird. Die Verbindungselemente können im Falle der Stromversorgung als Kontaktstifte ausgeführt sein und im Falle vom Kühlmedium und/oder Inertgas-Zufuhr als Leitungsenden ausgeführt sein.

Jeder Schmelzbehälter besitzt vorzugsweise ein Abnehmermodul. Es können somit mehrere Schmelzbehälter beliebig zum Einsatz kommen und untereinander ausgetauscht werden. Hingegen sind nur ein Versorgungsmodul und ein Satz flexible Stromkabel stationär an der Behandlungsstation erforderlich.

Nach dem Abkoppeln von Versorger- und Abnehmerseite wird der mobile Schmelzbehälter an die Transporteinrichtung mit eigenem Antrieb und Kühlaggregat automatisch angekoppelt und kann dann flexibel bewegt werden.

Das Abgießen der Schmelze aus dem Schmelzbehälter erfolgt vorzugsweise durch Kippen des Schmelzbehälters in der Behandlungsstation. Zu diesem Zweck weist der Schmelzbehälter vorzugsweise einen Auslass, vorzugsweise in Form eines Auslaufs (z.B. Gießrohr oder Gießschnauze), auf.

Dadurch, dass beim Lösen der Verbindung zwischen Schmelzbehälter und Transporteinrichtung die Medienleitungen, insbesondere Leitungen für das Kühlmedium und die Stromversorgung, getrennt werden, werden an dieser Behandlungsstation entsprechende Medienanschlüsse zwischen der Behandlungsstation und dem Schmelzbehälter vorgesehen.

Der Schmelzbehälter umfasst einen Tiegel, die Induktionsheizeinrichtung und ein Gehäuse. Der Schmelzbehälter ist also nicht lediglich ein Wechseltiegel, sondern umfasst vielmehr auch weitere wichtige Bestandteile eines Induktionsofens, wie beispielsweise die Induktionsspule.

Der Schmelzbehälter ist vorzugsweise offen ausgestaltet, kann aber während des Transportes zur Minimierung von Wärmeverlusten mit einer behelfsmäßigen Abdeckung ausgestattet werden. Der Schmelzbehälter weist also vorzugsweise eine Öffnung in seinem oberen Bereich auf. Durch die Öffnung kann metallisches Material in den Tiegel gefüllt werden. Auch eine Evakuierung oder ein Einleiten von Schutzgas ist dadurch möglich. Der Schmelzbehälter wird vorzugsweise erst an einer Behandlungsstation mit dem für die Behandlungsstation passenden Deckel zum Behandeln der Schmelze verschlossen. Zu diesem Zweck umfasst die Behandlungsstation vorzugsweise einen auf den Schmelzbehälter passenden Deckel. Der Deckel kann Anschlüsse umfassen, beispielsweise um den Schmelzbehälter zu evakuieren oder ein Schutzgas einzuleiten.

Der Tiegel ist derjenige Teil des Schmelzbehälters, in welchem das metallische Material behandelt wird. Daher ist er vorzugsweise aus einem Feuerfestmaterial gebildet. Das Feuerfestmaterial ist vorzugsweise ausgewählt aus Keramik und/oder Graphit. Bevorzugte Keramiken umfassen Aluminiumoxid und/oder Magnesiumoxid. Ein solcher Tiegel kann üblicherweise 10- bis 80-mal verwendet werden. Der Tiegel weist vorzugsweise ein Volumen von wenigstens 200 dm³ auf.

Der Schmelzbehälter ist vorzugsweise mit einem Auslauf ausgestattet, um die Schmelze nach Abschluss der Behandlung an der Behandlungsstation abgießen zu können. In einer alternativen Ausführungsform umfasst der Schmelzbehälter keinen Auslauf. Stattdessen kann der Deckel der Behandlungsstation mit einer Öffnung, insbesondere einem Auslauf, zum Abgießen der Schmelze ausgestattet sein.

Das Gehäuse des Schmelzbehälters ist vorzugsweise aus Metall gefertigt. Bevorzugtes Metall ist Stahl. Das Gehäuse kommt im normalen Betrieb nicht mit der Schmelze in Kontakt.

Zwischen Innentiegel und Außenwand ist vorzugsweise ein Zwischenraum vorhanden, der Platz für die Spule und Teile des Kühlsystems, zum Beispiel Leitungen für das Kühlmedium, bietet. In dem Zwischenraum können auch weitere Bestandteile des Schmelzbehälters angeordnet sein, wie etwa Messgeräte, insbesondere Temperatur und Druckmessgeräte.

In bevorzugten Ausführungsformen ist die Induktionsspule zwischen Innentiegel und Außenwand des Schmelzbehälters angeordnet, insbesondere um den Innentiegel herum gewickelt.

Der Schmelzbehälter ist vorzugsweise geeignet, an einer ersten Station mit metallischem Material, insbesondere geschmolzenem metallischen Material, befüllt zu werden, diese erste Station wird Einfüllstation genannt. Zu diesem Zweck wird der Schmelzbehälter vorzugsweise auf Schienen in den Bereich der Einfüllstation bewegt, insbesondere wird der Schmelzbehälter von einer Zugmaschine gezogen. Nach dem Einfüllen kann der Schmelzbehälter an die Behandlungsstation bewegt werden. In einer alternativen Ausführungsform wird das metallische Material an der Behandlungsstation, insbesondere über eine Materialschleuse, vorzugsweise von oben, in den Tiegel eingefüllt. Dies ist besonders vorteilhaft, wenn metallisches Material behandelt werden soll, welches unter Vakuum eingeschmolzen werden muss. Dies trifft beispielsweise auf verschiedene hochlegierte Stähle zu.

Das metallische Material verbleibt vorzugsweise während mehrerer Behandlungsschritte im Schmelzbehälter. Anders als im Stand der Technik ist es nämlich nicht erforderlich, geschmolzenes metallisches Material von einem Schmelztiegel in einen anderen zu überführen. Die Verwendung von Gießpfannen ist entbehrlich. Das macht das erfindungsgemäße Verfahren sehr nützlich bei der Herstellung hochlegierter Stähle, die unter Luftausschluss hergestellt werden müssen.

Der Schmelzbehälter umfasst vorzugsweise Überwachungseinrichtungen, um den Status der Schmelze zu überwachen. Solche Überwachungseinrichtungen sind beispielsweise Temperaturmessgeräte.

Dadurch, dass der Schmelzbehälter die Heizeinrichtung mit sich führt, kann die Behandlungsstation einfacher gestaltet werden. Im Stand der Technik wird normalerweise großer technischer Aufwand getrieben, um Tiegel in die Heizeinrichtungen einzusetzen. Dieser schwierige Vorgang kann erfindungsgemäß entfallen. Der Tiegel im erfindungsgemäßen Schmelzbehälter wird nur zu Wartungszwecken bzw. zum Tausch des Tiegels nach einer Serie von (vorzugsweise wenigstens zehn) Schmelzprozessen entfernt.

Aus der Tatsache, dass der Schmelzbehälter bereits die Heizeinrichtung zum Heizen der Schmelze enthält, ergibt sich der weitere Vorteil, dass die Heizeinrichtung näher an dem Tiegel angeordnet werden kann, in dem sich die Schmelze befindet. Erfindungsgemäß bevorzugt wird die Induktionsspule der Induktionsheizung zwischen Gehäuse und Tiegel des Schmelzbehälters angeordnet. Somit entfallen auch bestimmte Anforderungen hinsichtlich des Materials des Gehäuses. Es ist beispielsweise nicht erforderlich, dass die Gehäusewand geschlitzt ausgestaltet wird.

Die erfindungsgemäße Vorrichtung orientiert sich hinsichtlich der Behandlungsstation an dem in EP 0 212 072 A2 beschriebenen Induktionsofen. Der Schmelzbehälter der vorliegenden Erfindung entspricht in einigen Aspekten dem Ofenunterteil der zitierten Patentanmeldung. Der wesentliche Unterschied besteht darin, dass in der zitierten Patentanmeldung ein mobiler Schmelzbehälter nicht vorgesehen ist. Vielmehr muss der Induktionsofen zerlegt werden, um den Schmelzbehälter zugänglich zu machen.

Die Vorrichtung zum Behandeln von metallischem Material umfasst vorzugsweise eine Vorrichtung zum Befüllen des Schmelzbehälters entweder mit geschmolzenem oder festem metallischen Material (z.B. Einfüllstation). Die Vorrichtung kann eine Materialschleuse umfassen, welche auf die Öffnung des Schmelzbehälters aufgesetzt werden kann. In einer bevorzugten Ausführungsform wird diese Materialschleuse auf den Deckel der Behandlungsstation aufgesetzt. Der Deckel weist dann seinerseits eine Öffnung auf, die verschließbar ist. Eine Einfüllstation ist in dieser Ausführungsform nicht erforderlich, weil das Material direkt an der Behandlungsstation eingefüllt wird.

Die Behandlungsstation ist vorzugsweise so ausgestaltet, dass der Schmelzbehälter von unten an die Behandlungsstation gehoben wird. Es wird also vorzugsweise nicht der Deckel auf den Schmelzbehälter bzw. den Tiegel abgesenkt, sondern der Schmelzbehälter mitsamt Tiegel und Heizeinrichtung von unten an den Deckel gehoben. Deckel und Schmelzbehälter können über eine Flanschverbindung aneinander befestigt werden. Die Versorgung der Heizeinrichtung mit Strom und die Versorgung des Kühlsystems mit Kühlmedium werden dann vorzugsweise über eine Schnellkupplung - wie zuvor beschrieben - realisiert.

Die erfindungsgemäße Vorrichtung weist vorzugsweise eine Einrichtung zum Heben und Senken des Schmelzbehälters an der Behandlungsstation auf. Die Hubeinrichtung ist dafür geeignet, den Schmelzbehälter von einer ersten Position unterhalb des Deckels an eine zweite Position an der Behandlungsstation zu bewegen, diese Bewegung ist vorzugsweise eine Aufwärtsbewegung, es wird insbesondere nicht der Deckel der Behandlungsstation auf den Schmelzbehälter abgesenkt, sondern der Schmelzbehälter an den Deckel heran gehoben.

In bevorzugten Ausführungsformen umfasst die erfindungsgemäße Vorrichtung vorzugsweise genau eine Behandlungsstation, die insbesondere geeignet ist alle durchzuführenden Behandlungsschritte durchzuführen.

Die erfindungsgemäße Vorrichtung weist eine (vorzugsweise automatische) Schnellkupplung auf, die dazu geeignet ist, Versorgungsleitungen von der Behandlungsstation an den Schmelzbehälter anzuschließen, damit die Induktionsheizeinrichtung mit Strom versorgt und das Kühlsystem betrieben werden kann. Unter "automatisch" wird in diesem Zusammenhang verstanden, dass kein manuelles Einwirken auf die Schnellkupplung durch einen Menschen erforderlich ist. Die Verbindung wird vorzugsweise durch maschinell gesteuertes Verbinden von Versorger- und Abnehmermodul erzielt.

Die Behandlungsstation ist vorzugsweise als eine Art Induktionsofen ausgestaltet wie er in der europäischen Patentanmeldung EP 0 212 072 A2 beschrieben ist. Der Schmelzbehälter der vorliegenden Erfindung würde dann in etwa dem Ofenunterteil entsprechen. Hinsichtlich der weiteren Ausgestaltung der Behandlungsstation, insbesondere hinsichtlich der Einrichtung zum Kippen des Schmelzbehälters wird auf diese Patentanmeldung verwiesen. In diesem Zusammenhang sind die folgenden Merkmale in der gegenwärtigen Erfindung vorzugsweise auch enthalten. Der Deckel der Behandlungsstation ist vorzugsweise über eine Flanschverbindung mit dem Schmelzbehälter verbunden. Der Schmelzbehälter ist erfindungsgemäß bevorzugt mittels einer Gelenklagerung und eines Antriebs um eine Kippachse kippbar. Das Gehäuse des Schmelzbehälters ist selbstverständlich bevorzugt ebenfalls gasdicht ausgeführt. Der Kippantrieb greift vorzugsweise ebenfalls am Deckel der Behandlungsstation an. Der Deckel der Behandlungsstation ist vorzugweise an einem Ofengestell befestigt und verbleibt an diesem Ofengestell, wenn der Schmelzbehälter abgekoppelt wird. Die genannte Patentanmeldung wird hiermit durch Verweis in diese Anmeldung aufgenommen.

Erfindungsgemäß ist auch ein Verfahren zum Behandeln von metallischem Material unter Verwendung einer Vorrichtung gemäß einem der vorhergehenden Ansprüche, mit den Schritten (in beliebiger Reihenfolge),
- Ankoppeln des mobilen Schmelzbehälters an die Behandlungsstation,
- Einfüllen von metallischem Material in den Tiegel,
- Evakuieren des Schmelzbehälters (Tiegels),
- Heizen des Materials unter Vakuum
- optional Heizen des flüssigen Materials unter Schutzgas
- optional Heizen und Entgasen des flüssigen Materials in einem Schritt
- optional Entgasen mittels Gas-Spülstein oder elektromagnetischer Rührung
- optional weiteres Behandeln des metallischen Materials in dem Tiegel,
- Abgießen des metallischen Materials,
- optional Temperaturmessung des flüssigen Materials
- optional Probenahme aus dem flüssigen Material
   wobei
- das metallische Material beim Einfüllen geschmolzen oder fest ist, und
- der Tiegel beim Einfüllen bereits evakuiert ist oder nach dem Einfüllen evakuiert wird.

Der Fachmann kann ermitteln, welche Reihenfolge der genannten Verfahrensschritte geeignet ist, um sein entsprechendes Ziel zu erreichen. Insbesondere kann er beurteilen, ob es vorteilhaft ist, festes metallisches Material in den Tiegel einzufüllen oder ob dieses Material zuvor in einem Schmelzaggregat aufgeschmolzen werden sollte. Typischerweise ist es vorteilhaft, hoch legierte Stähle, die unter Vakuum aufgeschmolzen werden müssen, in festem Zustand in den Tiegel einzufüllen. Gleichermaßen kann das Ankoppeln an die Behandlungsstation entweder vor, da der Schmelzbehälter auf dem Transportwagen gekühlt werden kann, oder nach dem Einfüllen erfolgen.

Bevorzugt findet das Behandeln des metallischen Materials bei Temperaturen von 600°C bis 1700°C statt, besonders bevorzugt bei Temperaturen von 900 °C bis 1600 °C und weiter bevorzugt bei Temperaturen von 1100 °C bis 1550 °C und insbesondere von 1400°C bis 1500°C. Natürlich hängt die gewählte Temperatur von der Art des zu behandelnden metallischen Materials ab. Es ist besonders bevorzugt, dass das metallische Material nachdem es eingeschmolzen wurde, während des Verfahrens stets bei einer Temperatur von wenigstens 20 °C, weiter bevorzugt wenigstens 100 °C über dem Schmelzpunkt des metallischen Materials gehalten wird. Aufgrund der Heizeinrichtung im Schmelzbehälter ist ein solches Warmhalten sogar bei einem Transport des Schmelzbehälters realisierbar.

In einer bevorzugten Ausführungsform wird der Tiegel an einer Einfüllstation mit dem metallischen Material befüllt, welches dann vorzugsweise bereits geschmolzen ist. Der Tiegel wird dann vorzugsweise nach dem Einfüllen von der Einfüllstation an die Behandlungsstation bewegt, während die Induktionsheizeinrichtung den Inhalt des Tiegels auf einer Temperatur über dem Schmelzpunkt des metallischen Materials, vorzugsweise jedoch von wenigstens 600°C, hält. Sodann wird der Schmelzbehälter an der Behandlungsstation angekoppelt, insbesondere durch Anheben des Schmelzbehälters. Das Beladen (Befüllen) des Tiegels, das außerhalb der Behandlungsstation durchgeführt wird, kann mittels der Hilfskühlung direkt nach Abguss der vorausgegangenen Schmelze außerhalb der Behandlungsstation erfolgen, da der Schmelzbehälter mittels Schnellkupplung entfernt und weiter gekühlt werden kann.

In einer alternativen Ausführungsform wird festes metallisches Material in den Schmelzbehälter eingefüllt, während dieser an die Behandlungsstation angekoppelt ist. Das Einfüllen erfolgt vorzugsweise unter Verwendung einer Materialschleuse, die insbesondere auf den Deckel der Behandlungsstation aufgesetzt werden kann. Dieses Vorgehen empfiehlt sich insbesondere bei metallischem Material, welches nicht unter Einfluss von Luft geschmolzen und behandelt werden darf.

Behandlungsschritte, die an der Behandlungsstation durchgeführt werden, werden vorzugsweise unter Vakuum ausgeführt. Dabei herrscht in dem Schmelzbehälter, insbesondere dem Tiegel, vorzugsweise ein Druck von höchstens 1 mbar, weiter bevorzugt 10⁻¹ mbar, mehr bevorzugt höchstens 10⁻² mbar und insbesondere höchstens 10⁻³ mbar. Das Evakuieren erfolgt vorzugsweise über ein Vakuumpumpensystem, welches vorzugsweise Bestandteil der Behandlungsstation ist. Das Vakuumpumpensystem ist bevorzugt über eine oder mehrere Leitungen mit dem Deckel der Behandlungsstation verbunden, so dass das Innere des Schmelzbehälters evakuiert werden kann.

Erfindungsgemäß werden bevorzugt an der Behandlungsstation mehrere Behandlungsschritte durchgeführt. Vorzugsweise werden an der Behandlungsstation einer oder mehrere der Verfahrensschritte Heizen, Entgasen, Legieren, Rühren, Gasspülen und Abgießen durchgeführt. Es ist erfindungsgemäß nicht erforderlich, eine separate Heizapparatur und eine separate Entgasungsapparatur zu verwenden. Vielmehr können diese Schritte an einer Behandlungsstation durchgeführt werden, ohne dass das Vakuum im Innentiegel aufgehoben werden müsste. Es entfällt auch ein Transport zwischen mehreren Behandlungsstationen. Dadurch, dass das Vakuum während mehrerer Verfahrensschritte gehalten werden kann, wird ein Wasserstoff-, Sauerstoff- und Stickstoffeintrag wirksam verhindert.

Das erfindungsgemäße Verfahren umfasst vorzugsweise die Schritte Heizen, Entgasen, Legieren, Rühren, Gasspülen und Abgießen, besonders bevorzugt in der genannten Reihenfolge. Diese Schritte werden vorzugsweise alle in einem einzigen Tiegel durchgeführt. Während all dieser Schritte verbleibt der Deckel der Behandlungsstation vorzugsweise ununterbrochen auf dem Schmelzbehälter.

Ein weiterer Vorteil ist, dass eine im Wesentlichen zeitlich unbegrenzte Vakuumbehandlung der Schmelze möglich ist. Es ist nicht erforderlich, den Schmelzbehälter erneut zu einer Heizapparatur zu verfahren, wie es im Stand der Technik oft der Fall ist.

Der Schmelzbehälter kann an der Behandlungsstation mit einem Deckel verschlossen werden, der Bestandteil der Station ist. Der Deckel dichtet den Schmelzbehälter vorzugsweise gasdicht ab, so dass eine Vakuumbehandlung des metallischen Materials möglich ist. Somit ist keine große Vakuumkammer nötig, wie es in vielen Ausführungsformen aus dem Stand der Technik der Fall ist. Der Deckel kann Anschlüsse für Vakuumpumpen umfassen, so dass es nicht erforderlich ist, den Schmelzbehälter in eine Vakuumkammer einzubringen. Der Deckel wird vorzugsweise beim Ankoppeln des Schmelzbehälters an die Behandlungsstation mit dem Schmelzbehälter bzw. dem Tiegel verbunden.

Das Verfahren umfasst vorzugsweise einen Behandlungsschritt, der eine Vakuumbehandlung ist bzw. unter Vakuum durchgeführt wird. Der Schmelzbehälter kann von der Transporteinrichtung gelöst werden. Dies kann beispielsweise nützlich sein, um die Schmelze aus dem Schmelzbehälter abzugießen.

Das erfindungsgemäße Verfahren umfasst vorzugsweise ein Vorheizen des metallischen Materials, das fest eingebracht wurde, auf wenigstens 600 °C und höchstens 800 °C. Dieses Vorheizen findet vorzugsweise nach dem Einfüllen des Materials in den Schmelzbehälter statt. In bevorzugten Ausführungsformen hat der Tiegel bereits eine Temperatur in dem Bereich, wenn Material eingefüllt wird.

In einer bevorzugten Ausführungsform kann nach einem ersten Schmelzschritt an der Behandlungsstation weiteres metallisches Material in den Tiegel eingefüllt werden. Dieses Einfüllen erfolgt vorzugsweise unter Verwendung derselben Materialschleuse, wie sie oben beschrieben ist.

Sofern ein mit geschmolzenem Material befüllter Schmelzbehälter transportiert wird, so ist es erfindungsgemäß bevorzugt, dass die Schmelze während des Transportes nicht gerührt wird. Der Grund dafür ist, dass die erfindungsgemäße Vorrichtung und das erfindungsgemäße Verfahren dazu bestimmt sind, sehr hochwertige Stähle herzustellen. Solche Stähle können nur in akzeptabler Qualität hergestellt werden, wenn der Luft-Einfluss so gering wie möglich gehalten wird. Eine Rührung der Schmelze würde jedoch zu erhöhten Temperaturverlusten und Aufnahme von Wasserstoff, Stickstoff und Sauerstoff in die Schmelze führen. Der Schmelzbehälter ist normalerweise während des Transportes nicht verschlossen, weil der Deckel Bestandteil der Behandlungsstation ist. Der Schmelzbehälter kann jedoch behelfsmäßig abgedeckt werden, um den Wärmeverlust zu verringern.

Der Tiegel, die Spule und das Gehäuse des Schmelzbehälters werden vorzugsweise während der Durchführung des erfindungsgemäßen Verfahrens nicht voneinander getrennt. Diese Komponenten bilden insofern eine Einheit.

Der Behälter dieser Erfindung fasst Metall in Mengen von vorzugsweise 1 bis 40 t, weiter bevorzugt 5 bis 30 t, insbesondere bis 10 t.

Weiterhin können mehrere Schmelzbehälter nacheinander in der Behandlungsstation behandelt werden. Dies bietet sich insofern an, um die Produktivität des Verfahrens zu erhöhen. Dabei ist vorgesehen, Schmelzbehälter abwechselnd oder in Zyklen in der Behandlungsstation zu behandeln, während weitere Schmelzbehälter, vorzugsweise an oder auf Transporteinrichtungen, beladen werden oder zu einer Tiegelausbruchstation oder Tiegelausmauerungsstation bewegt werden. Die Tiegelausbruchstation ist bevorzugt am Ende einer Tiegelreise vorgesehen. Die Tiegelausmauerungsstation (Tiegelzustellstation) ist vorzugsweise zur Vorbereitung des Einsatzes des Tiegels vorgesehen. Vorzugsweise ist auch eine Tiegeltrocknungsstation vorhanden. Die Bewegung des Schmelzbehälters zu diesen Zwecken kann mittels einer oder mehrerer Transporteinrichtungen realisiert werden.

### Figurenbeschreibung

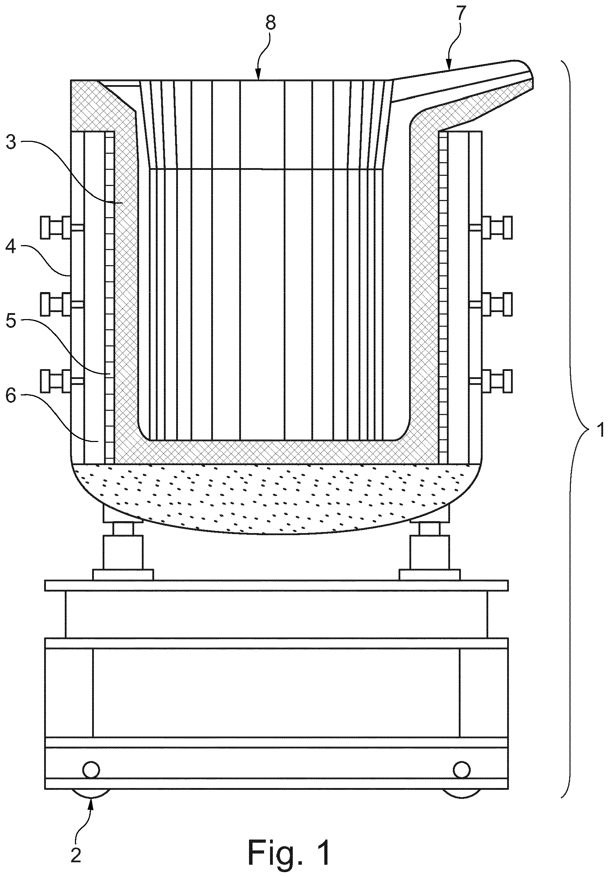

**Figur 1** zeigt einen erfindungsgemäßen mobilen Schmelzbehälter 1. Der Schmelzbehälter weist Räder 2 auf, mit denen er auf Schienen bewegt werden kann. Der Schmelzbehälter verfügt über einen Tiegel 3 und Gehäuse 4. Der Tiegel dient zur Aufnahme von metallischem Material, welches im Schmelzbehälter behandelt werden kann. Das Gehäuse schützt den Tiegel und Teile der Heizeinrichtung sowie des Kühlsystems, die zwischen Gehäuse und Tiegel angeordnet sind. Die Heizeinrichtung umfasst eine Spule 5, welche in dem Zwischenraum angeordnet ist. Die Spule wird durch das Kühlsystem gekühlt. Zu diesem Zweck sind Leitungen 6 für Kühlmittel ebenfalls in dem Zwischenraum zwischen Gehäuse und Tiegel angeordnet. Eine Gießschnauze 7 ist im oberen Bereich an der Öffnung 8 des Schmelzbehälters am Tiegel angeordnet, damit geschmolzenes Material durch Kippen des Schmelzbehälters abgegossen werden kann.

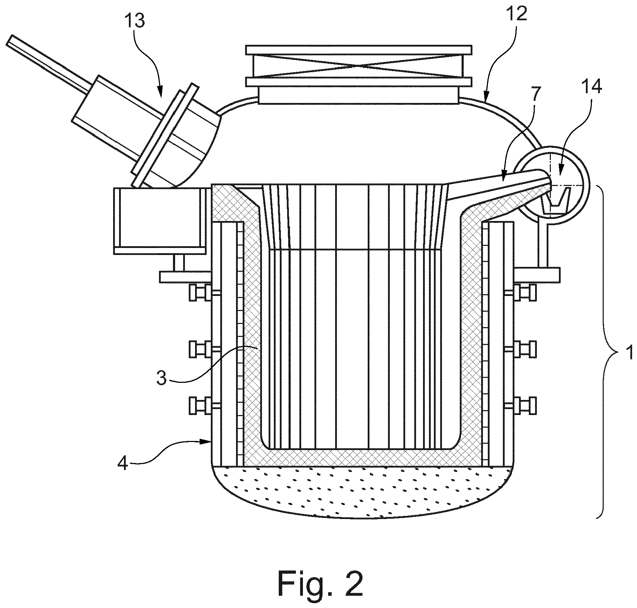

**Figur 2** zeigt einen Schmelzbehälter 1, der über einen Deckel 12 mit der Behandlungsstation verbunden ist. Der Deckel dichtet den Schmelzbehälter gasdicht ab, so dass der Innenraum des Schmelzbehälters, welcher durch den Tiegel 3 begrenzt ist, evakuiert oder mit Schutzgas befüllt werden kann. Zu diesem Zweck weist der Deckel vorzugsweise wenigstens einen Anschluss 13 auf. Der Anschluss kann eine Verbindung zu einer Vakuumpumpe und/oder einer Schutzgasquelle herstellen. Die Heizeinrichtung ist im Schmelzbehälter zwischen Tiegel und Gehäuse angeordnet. Die zum Betrieb der Heizeinrichtung erforderlichen Medien, insbesondere Strom und Kühlmedium, werden in diesem Betriebszustand von der Behandlungsstation bereitgestellt. Bei Verbindung des Deckels mit dem Schmelzbehälter werden gleichzeitig bevorzugt Medienanschlüsse angekoppelt, insbesondere über eine Schnellkupplung (nicht gezeigt). Nach Abschluss des Behandlungsvorgangs kann die Schmelze über die Gießschnauze 7 abgegossen werden. Vorteilhafterweise weist die Behandlungsstation eine Kippeinrichtung auf, welche geeignet ist, den Schmelzbehälter über eine Kippachse 14 zu kippen.

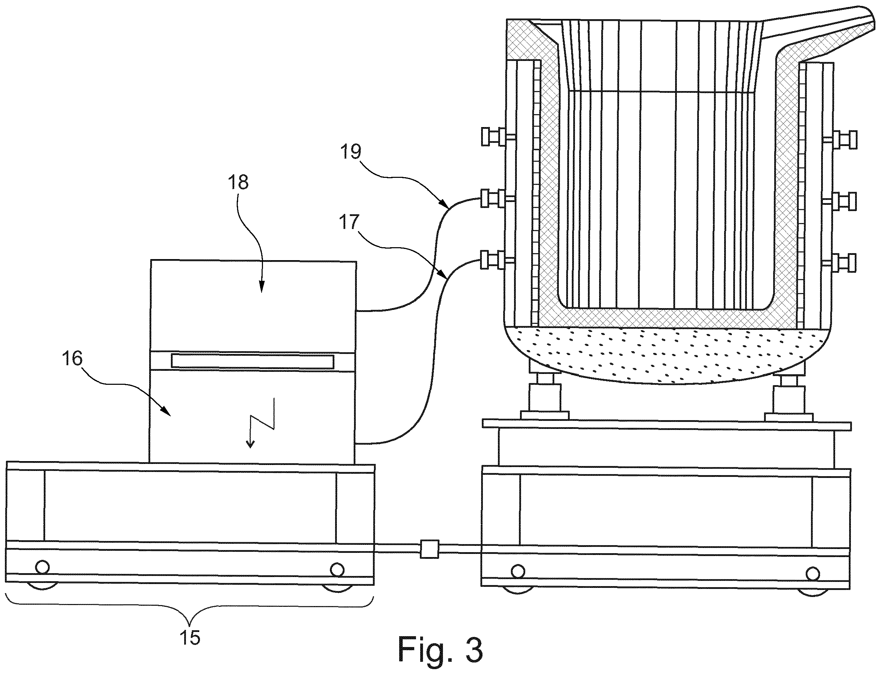

**Figur 3** zeigt einen Schmelzbehälter wie zuvor beschrieben zusammen mit einer Transporteinrichtung 15 in Form einer Zugmaschine. Die Zugmaschine ist geeignet, den Schmelzbehälter auf Schienen zu ziehen. Auf der Transporteinrichtung ist vorzugsweise eine Stromversorgung 16 angeordnet, die über Leitungen 17 die Heizeinrichtung des Schmelzbehälters mit Strom versorgt. Ferner können auf der Transporteinrichtung Teile des Kühlsystems 18 angeordnet sein. Insbesondere kann von dort eine Versorgung der Leitungen für Kühlflüssigkeit im Schmelzbehälter über Leitungen 19 erfolgen.

### Bevorzugte Prozesssequenz

Es folgt eine Beschreibung eines typischen Verfahrens, wie es mit der erfindungsgemäßen Vorrichtung durchgeführt werden kann.

Einer oder mehrere der folgenden Verfahrensschritte sind vor dem Einschmelzen bevorzugt durchzuführen:
- Einfüllen des Materials in den Tiegel unter Atmosphäre oder Vakuum. Fest- oder Flüssigchargierung ist möglich.
- Der Tiegel wird dann mit dem Hauptbestandteil der herzustellenden Legierung beladen.
- Es folgt das Evakuieren des Tiegels und weiterer Bestandteile in der Behandlungsstation (z. B. Schmelzkammer, Gießkammer, Gießrinnenkammer, Chargierkammer)
- Durchführung einer Dichtigkeitsprüfung
- Einschalten der Heizeinrichtung und Start des Einschmelzens bei positivem Ergebnis der Dichtigkeitsprüfung
- Kontinuierliches Abpumpen des Schmelztiegels zur Wahrung des Unterdrucks und zur Absaugung austretender Gase

Folgende Verfahrensschritte sind nach Beginn des Einschmelzens bevorzugt durchzuführen:
- Einschmelzen des Materials. Meist unter Vakuum, kann auch teilweise unter Inertgasatmosphäre stattfinden
- Für Sonderstähle und Superlegierungen ist Luftausschluss sicher zu stellen
- Für einfache Stahlqualitäten, Kupferlegierungen mit geringen Ansprüchen kann Einschmelzen auch unter Luft erfolgen

Einer oder mehrere der folgenden Verfahrensschritte sind nach Einschmelzen des Materials bevorzugt durchzuführen:
- Nachchargieren von Material, Zugabe von Legierungszusätzen und/oder Vakuumbehandlung (Entgasen unter Vakuum und durch Rühren der flüssigen Schmelze)
- Reinigung und Homogenisierung der Schmelze
- Entfernung von Elementen durch Entgasen (Stickstoff, Wasserstoff, volatile Spurenelemente) oder durch chemische Reaktionen (Sauerstoff, Kohlenstoff)

Einer oder mehrere der folgenden Verfahrensschritte sind nach Einschmelzen des Materials und vor dem Abgießen bevorzugt durchzuführen:
- Probenahme, Temperaturmessung
- Erfolgt unter Vakuum: Probenehmer oder Thermoelemente werden vorzugsweise über die Chargierkammer in den Schmelzbehälter abgesenkt
- Wiederholen von Nachchargieren, Vakuumbehandeln, Entgasen, Raffinieren, Probenehmen und/oder Temperaturmessen bis die gewünschte Reinheit und Legierungszusammensetzung erhalten wird
- Die Schmelze kann zeitlich nahezu unbegrenzt behandelt werden
- Zugabe volatiler Legierungszusätze (volatile Legierungszusätze wie beispielsweise Magnesium verdampfen im Vakuum, ihre Zugabe muss daher kurz vor dem Abguss erfolgen)
- Letzte Temperaturmessung und Probenahme
- Abguss der Schmelze in Kokillen
- Reinigung der Kammern und des Schmelztiegels falls notwendig, danach Start neuer Prozess

### Bezugszeichenliste

- (1): Schmelzbehälter
- (2): Räder
- (3): Tiegel
- (4): Gehäuse
- (5): Spule
- (6): Leitungen
- (7): Gießschnauze
- (8): Öffnung des Schmelzbehälters
- (9): nicht belegt
- (10): nicht belegt
- (11): nicht belegt
- (12): Deckel
- (13): Anschluss
- (14): Kippachse
- (15): Transporteinrichtung
- (16): Stromversorgung
- (17): Leitungen
- (18): Kühlsystem
- (19): Leitungen

## Patentansprüche

1. Vorrichtung zum Behandeln von metallischem Material, umfassend einen mobilen Schmelzbehälter und mindestens eine Behandlungsstation, wobei
• der mobile Schmelzebehälter einen Tiegel, eine Induktionsheizeinrichtung mit einer Spule und ein Gehäuse umfasst,
• die Behandlungsstation einen Deckel aufweist, der geeignet ist, den Tiegel gasdicht zu verschließen, und
• der mobile Schmelzbehälter von der Behandlungsstation gelöst und unabhängig von der Behandlungsstation verfahren werden kann,
**dadurch gekennzeichnet, dass**
• die Vorrichtung über ein Schnelikupplungssystem verfügt, so dass Versorgungsleitungen von der Behandlungsstation an den mobilen Schmelzbehälter angeschlossen werden können, um die Induktionsheizeinrichtung zu kühlen und mit Strom zu versorgen,
• eine Transporteinrichtung vorgesehen ist, die geeignet ist, den Schmelzbehälter aus dem Bereich der Behandlungsstation heraus zu bewegen,
• Mittel an oder in der Transporteinrichtung und/oder dem mobilen Schmelzbehälter vorgesehen sind, um die Induktionsheizeinrichtung während der Bewegung des Schmelzbehälters zu kühlen und mit Strom zu versorgen.

2. Vorrichtung nach Anspruch 1, wobei die Transporteinrichtung und/oder der Schmelzbehälter ein Kühlaggregat und/oder ein Stromaggregat aufweisen, um die Spule während des Transports zu kühlen und mit Strom zu versorgen.

3. Vorrichtung nach Anspruch 1 oder 2, wobei die Transporteinrichtung eine Zugmaschine ist.

4. Vorrichtung nach einem der vorhergehenden Ansprüche, wobei die Induktionsheizeinrichtung jedenfalls nach Ankopplung an die Behandlungsstation über eine Leistung im Bereich von wenigstens 1 MW - 7 MW verfügt.

5. Vorrichtung nach wenigstens einem der vorhergehenden Ansprüche, wobei die Behandlungsstation über eine Kippeinrichtung verfügt, um eine Schmelze des metallischen Materials abzugießen.

6. Vorrichtung nach wenigstens einem der vorhergehenden Ansprüche, wobei die Schnellkupplung drei Komponenten umfasst: ein Abnehmermodul, auf der Abnehmerseite, ein Versorgungsmodul auf der Versorgungsseite, das mit der Hauptstromversorgung und der Hauptkühlmittelversorgung verbunden ist, und eine Aufnahme- und Hubeinheit.

7. Vorrichtung nach Anspruch 6, wobei am Abnehmermodul oder am Versorgungsmodul Öffnungen vorgesehen sind, die geeignet sind, Verbindungselemente des anderen Moduls aufzunehmen, wobei die Verbindungselemente so geformt sind, dass sie in die Öffnungen eingeführt werden können.

8. Verfahren zum Behandeln von metallischem Material unter Verwendung einer Vorrichtung gemäß einem der vorhergehenden Ansprüche, mit den Schritten (in beliebiger Reihenfolge),
• Ankoppeln des mobilen Schmelzbehälters an die Behandlungsstation,
• Einfüllen von metallischem Material in den Tiegel,
• Evakuieren des Tiegels,
• Behandeln des metallischen Materials in dem Tiegel unter Einfluss von Wärme und Vakuum, und
• Abgießen des metallischen Materials,
wobei
• das metallische Material beim Einfüllen geschmolzen oder fest ist, und
• der Tiegel beim Einfüllen bereits evakuiert ist oder nach dem Einhüllen evakuiert wird.

9. Verfahren nach Anspruch 8, wobei das Behandeln des metallischen Materials bei Temperaturen von 600°C bis 1700°C stattfindet.

10. Verfahren nach Anspruch 8 oder 9, wobei der Tiegel an einer Einfüllstation mit dem metallischen Material befüllt und dann erst nach dem Einfüllen und Ankoppein an die Behandlungsstation evakuiert wird.

11. Verfahren nach Anspruch 10, wobei der Tiegel nach dem Einfüllen von der Einfüllstation an die Behandlungsstation bewegt wird, während die Induktionsheizeinrichtung den Inhalt des Tiegels auf einer Temperatur von wenigstens 600°C hält, oder der Tiegel nach dem Einfüllen des flüssigen Materials von der Einfüllstation an die Behandlungsstation bewegt wird, während die Schmelze mindestens 10°C über ihrem Schmelzpunkt gehalten wird.

12. Verfahren nach wenigstens einem der vorhergehenden Ansprüche 8 bis 11, wobei die Induktionsspule beim Behandeln in der Behandlungsstation mit einer Menge an einem Kühlmedium gekühlt wird, die wenigstens der doppelten Menge des Kühlmediums entspricht, die zum Kühlen der Induktionsspule während des Transports auf der Transportvorrichtung erforderlich ist.

13. Verfahren nach wenigstens einem der vorhergehenden Ansprüche 8 bis 12, wobei das metallische Material Eisen, Kobalt, Chrom, Kupfer und/oder Nickel in einem Anteil von mehr als 50 Gew.-% umfasst.

14. Verfahren nach wenigstens einem der vorherigen Ansprüche 8 bis 13, wobei das Material in der Behandlungsstation bei Drücken kleiner 10⁻¹ mbar bei gleichzeitigem Heizen behandelt wird.

15. Verfahren nach wenigstens einem der Ansprüche 8 bis 14 zur Nutzung der Vorrichtung umfassend mehr als einen Schmelzbehälter, die nacheinander in der gleichen Behandlungsstation behandelt werden können.

## Claims

1. A device for treating metallic material, comprising a mobile melting vessel and at least one treatment station, wherein
• the mobile melting vessel comprises a crucible, an induction heater with a coil and a housing,
• the treatment station comprises a lid which is suitable for gas-tightly closing the crucible, and
• the mobile melting vessel can be disjoined from the treatment station and can be moved independently from the treatment station,
**characterized in that**
• the device comprises a quick-coupling system so that supply lines from the treatment station can be connected to the mobile melting vessel for cooling the induction heater and supplying it with electricity,
• a transport facility is provided which is suitable for moving the melting vessel out of the area of the treatment station,
• means at or in the transport facility and/or the mobile melting vessel are provided for cooling the induction heater and supplying it with electricity during the movement of the melting vessel.

2. The device according to claim 1, wherein the transport facility and/or the melting vessel comprise a cooling unit and/or a power unit for cooling the coil and supplying it with electricity during the transport.

3. The device according to claim I or 2, wherein the transport facility is a towing vehicle.

4. The device according to one of the preceding claims, wherein the induction heater at least after connecting it to the treatment station is provided with a power in the range of at least 1MW-7MW.

5. The device according to at least one of the preceding claims, wherein the treatment station is provided with a tilting facility for pouring off a melt of the metallic material.

6. The device according to at least one of the preceding claims, wherein the quick-coupling facility comprises three components: a consumer module on the consumer side, a supply module on the supply side which is connected with the main power supply and the main coolant supply, and a support and lifting unit.

7. The device according to claim 6, wherein at the consumer module or at the supply module openings are provided which are suitable for receiving connecting elements of the other module, wherein the connecting elements are designed such that they can be inserted into the openings.

8. A method for treating metallic material using a device according to one of the preceding claims, comprising the steps of (in arbitrary order)
• coupling the mobile melting vessel to the treatment station,
• filling metallic material into the crucible,
• evacuating the crucible,
• treating the metallic material in the crucible under the influence of heat and vacuum, and
• pouring off the metallic material,
wherein
• during the filling the metallic material is molten or solid, and
• the crucible is already evacuated during the filling or will be evacuated after the filling.

9. The method according to claim 8, wherein the treatment of the metallic material is conducted at temperatures of 600°C to 1700°C.

10. The method according to claim 8 or 9, wherein the crucible is filled with the metallic material at a filling station and then, only after filling and coupling it to the treatment station it is evacuated.

11. The method according to claim 10, wherein the crucible after filling is moved from the filling station to the treatment station, while the induction heater maintains the temperature of the content of the crucible at a value of at least 600°C, or the crucible after filling in the liquid material is moved from the filling station to the treatment station, while the melt is maintained at a temperature which is at least 10°C higher than its melting point.

12. The method according to at least one of the preceding claims 8 to 11, wherein the induction coil during the treatment in the treatment station is cooled with an amount of a cooling medium which is at least the double amount of the cooling medium being required for cooling the induction coil during the transport on the transport facility.

13. The method according to at least one of the preceding claims 8 to 12, wherein the metallic material comprises iron, cobalt, chromium, copper and/or nickel in a proportion of higher than 50 % by weight.

14. The method according to at least one of the preceding claims 8 to 13, wherein the material is treated in the treatment station at pressures of lower than 10⁻¹ mbar during simultaneous heating.

15. The method according to at least one of claims 8 to 14 for using the device comprising more than one melting vessel which can be treated one after the other in the same treatment station.

## Revendications

1. Dispositif de traitement de matériau métallique, comprenant un récipient de fusion mobile et au moins un poste de traitement, dans lequel
- le récipient de fusion mobile comporte un creuset, un dispositif de chauffage à induction avec une bobine et un boîtier,
- le poste de traitement présente un couvercle qui est approprié afin de fermer de manière étanche au gaz le creuset, et
- le récipient de fusion mobile peut être détaché du poste de traitement et déplacé indépendamment du poste de traitement,
**caractérisé en ce que**
- le dispositif dispose d'un système de couplage rapide de sorte que des conduites d'alimentation puissent être raccordées du poste de traitement au récipient de fusion mobile afin de refroidir le dispositif de chauffage à induction et de l'alimenter en courant,
- un dispositif de transport est prévu, lequel est approprié afin de déplacer le récipient de fusion hors de la zone du poste de traitement,
- des moyens sur ou dans le dispositif de transport et/ou le récipient de fusion mobile sont prévus afin de refroidir le dispositif de chauffage à induction pendant le déplacement du récipient de fusion et de l'alimenter en courant.

2. Dispositif selon la revendication 1, dans lequel le dispositif de transport et/ou le récipient de fusion présentent un groupe de refroidissement et/ou un groupe d'alimentation en courant afin de refroidir la bobine pendant le transport et de l'alimenter en courant.

3. Dispositif selon la revendication 1 ou 2, dans lequel le dispositif de transport est une machine de traction.

4. Dispositif selon l'une des revendications précédentes, dans lequel le dispositif de chauffage à induction dispose en tout cas après le couplage au poste de traitement d'une puissance dans la plage d'au moins 1 MW à 7 MW.

5. Dispositif selon au moins l'une des revendications précédentes, dans lequel le poste de traitement dispose d'un dispositif de basculement afin de verser une fonte du matériau métallique.

6. Dispositif selon au moins l'une des revendications précédentes, dans lequel le couplage rapide compte trois composants : un module préleveur, sur le côté préleveur, un module d'alimentation sur le côté alimentation qui est relié à l'alimentation en courant principale et l'alimentation en moyen de refroidissement principale, et une unité de réception et de levage.

7. Dispositif selon la revendication 6, dans lequel sur le module préleveur ou sur le module d'alimentation des ouvertures sont prévues qui sont appropriées afin de recevoir des éléments de raccordement de l'autre module, dans lequel les éléments de raccordement sont formés de sorte qu'ils puissent être introduits dans les ouvertures.

8. Procédé de traitement de matériau métallique en utilisant un dispositif selon l'une des revendications précédentes, avec les étapes (dans l'ordre quelconque),
- couplage du récipient de fusion mobile au poste de traitement,
- remplissage du matériau métallique dans le creuset,
- évacuation du creuset,
- traitement du matériau métallique dans le creuset sous effet de la chaleur et du vide, et
- versement du matériau métallique,
dans lequel
- le matériau métallique est fondu ou solide lors du remplissage, et
- le creuset est déjà évacué lors du remplissage ou est évacué après le remplissage.

9. Procédé selon la revendication 8, dans lequel le traitement du matériau métallique a lieu à des températures de 600 °C à 1700 °C.

10. Procédé selon la revendication 8 ou 9, dans lequel le creuset est rempli sur un poste de remplissage en matériau métallique et n'est évacué ensuite qu'après le remplissage et le couplage au poste de traitement.

11. Procédé selon la revendication 10, dans lequel le creuset est déplacé après le remplissage du poste de remplissage au poste de traitement alors que le dispositif de chauffage à induction maintient le contenu du creuset à une température d'au moins 600 °C, ou le creuset est déplacé après le remplissage du matériau liquide du poste de remplissage au poste de traitement alors que la fonte est maintenue au moins 10 °C au-dessus de son point de fusion.

12. Procédé selon au moins l'une des revendications 8 à 11 précédentes, dans lequel la bobine d'induction est refroidie lors du traitement dans le poste de traitement avec une quantité d'un agent de refroidissement qui correspond au moins à la quantité doublée de l'agent de refroidissement qui est nécessaire au refroidissement de la bobine d'induction pendant le transport sur le dispositif de transport.

13. Procédé selon au moins l'une des revendications 8 à 12 précédentes, dans lequel le matériau métallique comporte du fer, du cobalt, du chrome, du cuivre et/ou du nickel dans une part de plus de 50 % en poids.

14. Procédé selon au moins l'une des revendications 8 à 13 précédentes, dans lequel le matériau est traité dans le poste de traitement en cas de pressions inférieures à 10⁻¹ mbar en cas de chauffage simultané.

15. Procédé selon au moins l'une des revendications 8 à 14 pour l'utilisation du dispositif comprenant plus d'un récipient de fusion qui peuvent être traités les uns après les autres dans le même poste de traitement.
